# EUROPEAN PATENT APPLICATION

(11) **EP 4 742 607 A1**
(43) Date of publication of application: **13.05.2026**
(21) Application number: 24870126.0
(22) Date of filing: 09.08.2024
(51) Int. Cl.: H04L 41/069, H04L 41/0631

(54) **AUTOMATIC VERIFICATION METHOD AND SYSTEM FOR COMMUNICATION DATA ACCESS OF MULTI-DISCIPLINARY LINE NETWORK INTELLIGENT OPERATION AND MAINTENANCE PLATFORM**

(30) Priority: 26.09.2023 CN 202311262564
(71) Applicant: Casco Signal Ltd., Shanghai 200435 (CN)
(72) Inventor: WEI, Li, Shanghai 200435 (CN); WANG, Yiduo, Shanghai 200435 (CN); LIU, Wen, Shanghai 200435 (CN); LIU, Hongsheng, Shanghai 200435 (CN); WANG, Yu, Shanghai 200435 (CN); MA, Yongheng, Shanghai 200435 (CN); GUO, Yuanlong, Shanghai 200435 (CN)
(74) Representative: Sun, Yiming
(86) International application number: PCT/CN2024/110956
(87) International publication number: WO 2025/066578

(57) **Abstract**

The present invention relates to an automatic verification method and system for communication data access of a multi-disciplinary line network intelligent operation and maintenance platform. The method includes: acquiring a JSON structure body describing device attributes, a device attribute constraint condition, a communication system device information table and a communication system log file; parsing the JSON structure body describing the device attributes and the device attribute constraint condition, and constructing a structure body to record parsed JSON structure body information and the parsed constraint condition; extracting a device name and device ID fields from the communication system device information table, and constructing a monitored device information table; parsing the communication system log file based on data of the constructed structure body; and comparing a parsing result of the communication system log file with the monitored device information table, and outputting a verification result. Compared with the prior art, the present invention can automatically and quickly verify an accessed communication system data packet, has high efficiency, and can comprehensively check all accessed communication device information.

## Description

### TECHNICAL FIELD

The present invention relates to the field of communication technology, and in particular to an automatic verification method and system for communication data access of a multi-disciplinary line network intelligent operation and maintenance platform.

### BACKGROUND

With the maturity and application of new-generation technologies such as the Internet of Things, big data, and artificial intelligence, the technical conditions for promoting the transformation of operation and maintenance modes based on intelligent technologies have been established.

Some domestic manufacturers have carried out researches on intelligent operation and maintenance systems for line signals and communications, and have achieved critical progress, enabling the construction of multi-disciplinary line network intelligent operation and maintenance systems for subways. The functional positioning of the multi-disciplinary line network intelligent operation and maintenance platform for subways is to establish interfaces between the platform and various lines/core businesses. By technological innovation and business integration, real-time visualization monitoring of key facilities and equipment, rapid fault diagnosis and localization, and the like are achieved.

By searching, Chinese invention patent application No. CN114282503A discloses a scheme for generating a technical logbook for railway communication equipment. The scheme is to create technical logbook classification, and create a technical logbook table under the created technical logbook classification, then configure table headers under the created table, and to establish a correlation between the technical logbook and equipment, thereby generating the technical logbook. That is, this technology manages railway communication equipment only through table classification and partitioning, and does not involve automatic verification of communication data.

Currently, at the early stage of access, technical personnel need to manually verify whether the communication system data information accessed by the multi-disciplinary line network intelligent operation and maintenance platform for subways meets the requirements. Meanwhile, technical personnel need to manually verify whether all communication devices have been received by the multi-disciplinary line network intelligent operation and maintenance platform for subways. The above-mentioned manual verification of the accessed communication system data information is time-consuming, labor-intensive, and inefficient. Moreover, due to the large number of communication devices accessed, it fails to achieve comprehensive verification.

Therefore, it is urgently necessary to design an automatic verification method and system for communication data access of a multi-disciplinary line network intelligent operation and maintenance platform.

### SUMMARY

To overcome the defects existing in the prior art, the present invention aims at providing an automatic verification method and system for communication data access of a multi-disciplinary line network intelligent operation and maintenance platform, enabling efficient, accurate, and comprehensive verification of the data information accessed.

The objective of the present invention can be achieved by the following technical solution:
According to a first aspect of the present invention, provided is an automatic verification method for communication data access of a multi-disciplinary line network intelligent operation and maintenance platform. The method includes:
acquiring a JSON structure body describing device attributes, a device attribute constraint condition, a communication system device information table, and a communication system log file;
parsing the JSON structure body describing device attributes and the device attribute constraint condition, and constructing a structure body to record parsed JSON structure body information and a parsed constraint condition;
extracting a device name and a device ID field from the communication system device information table to construct a monitored device information table;
parsing the communication system log file based on data of the constructed structure body; and
comparing a parsing result of the communication system log file with the monitored device information table, and outputting a verification result.

Preferably, the process of parsing the JSON structure body describing device attributes specifically includes:
extracting device attribute fields from the JSON structure body, decomposing a key and a value of each device attribute field, and identifying a data type of the value; if the data type of the value is an array field, continuing parsing until the JSON structure body describing device attributes is parsed completely.

Preferably, if the data type of the value is an array field, parsing is continued until the JSON structure body describing device attributes is completely parsed, specifically as follows: If the data type of the value is the array field, the array field is parsed, an array name is recorded, a key and a value that constitute array data are decomposed, and a data type of the value is identified. If there is still an array field, it continues parsing the array field until the JSON structure body describing device attributes is parsed completely.

Preferably, the data type of the value includes a number, a string, an array, and Boolean.

Preferably, the parsed JSON structure body information and the parsed constraint condition include a device name field and a device ID field.

Preferably, the communication system device information table is an input file of various devices for accessing a multi-disciplinary line network platform of a subway provided by a communication manufacturer.

Preferably, parsing the communication system log file based on data of the constructed structure body specifically includes:
1) extracting data information from the communication system log file, searching for a keyword in the data information to match the JSON structure body; if not matched successfully, giving a prompt and continuing searching until there is a successful match;
2) checking whether the data information meets requirements of the JSON structure body information and the constraint condition according to a matched JSON structure body, and recording the device name, the device ID, and a corresponding unqualified issue in the data information; and
3) continuing to repeat steps 1) to 2) until the communication system log file is extracted and parsed completely.

Preferably, the checking whether the data information meets requirements of the JSON structure body information and the constraint condition in step 2) specifically includes: if there is no unknown or missing device attribute field, and the data type of the value in each field is correct, the constraint condition is satisfied.

Preferably, the verification result includes device information being received, device information being unreceived, and device information being unknown.

According to a second aspect of the present invention, provided is an automatic verification system for communication data access of a multi-disciplinary line network intelligent operation and maintenance platform is provided. The system includes:
an input module, configured to acquire a JSON structure body describing device attributes, a device attribute constraint condition, a communication system device information table, and a communication system log file;
a parsing module for the JSON structure body describing device attributes and the device attribute constraint condition, configured to parse the JSON structure describing device attributes and the device attribute constraint condition, and to construct a structure body to record parsed JSON structure body information and the parsed constraint condition;
a monitored device information table construction module, configured to extract a device name and a device ID field from the communication system device information table to construct a monitored device information table;
a log file parsing module, configured to parse the communication system log file based on data of the constructed structure body; and
a verification module, configured to compare a parsing result of the communication system log file with the monitored device information table, and to output a verification result.

Preferably, the parsing module for the JSON structure body describing device attributes and the device attribute constraint condition is provided with a parsing submodule for the JSON structure body describing device attributes. The parsing submodule is configured to extract device attribute fields in the JSON structure body, decompose a key and a value of each device attribute field, and to identify a data type of the value. If the data type of the value is an array field, parsing is continued until the JSON structure body describing device attributes is parsed completely.

Preferably, the log file parsing module specifically includes:
a search and match submodule, configured to extract data information from the communication system log file, search for a keyword in the data information to match the JSON structure body; if not matched successfully, giving a prompt and continuing searching until there is a successful match;
a checking submodule, configured to check whether the data information meets requirements of the JSON structure body information and the constraint condition according to a matched JSON structure body, and to record the device name, the device ID, and a corresponding unqualified issue in the data information; and
a loop submodule, configured to repeatedly operate the search and match submodule and the checking submodule until the communication system log file is extracted and parsed completely.

Preferably, the verification result output by the verification module includes device information being received, device information being unreceived, and device information being unknown.

According a third technical aspect of the present invention, an electronic device is provided, including a memory and a processor, where a computer program is stored in the memory, and when the processor executes the program, the above method is implemented.

According to a fourth aspect of the present invention, a computer-readable storage medium that stores a computer program is provided, and when the program is executed by a processor, the above method is implemented.

Compared with the conventional technologies, the present invention has the following advantages:
1) The present invention can achieve automatic and rapid verification of the accessed communication system data packets by parsing the JSON structure body describing device attributes, the device attribute constraint condition, the communication system device information table, and the communication system log file, and comparing the information based on the device name and the device ID fields, thereby improving efficiency.
2) In the present invention, all the device name and device ID fields are extracted from the communication system device information table to construct the monitored device information table; and then the monitored device information table is checked against the log parsing results. Such a configuration enables more comprehensive verification of all the accessed communication device information.

### BRIEF DESCRIPTION OF THE DRAWINGS

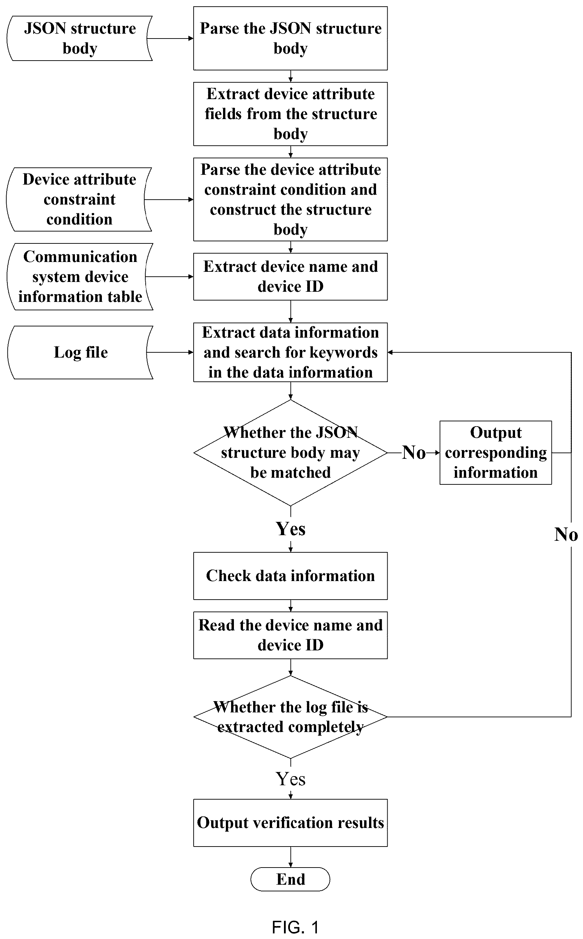

FIG. 1 is a flow chart of a method according to the present invention.

### DETAILED DESCRIPTION OF THE EMBODIMENTS

The technical solutions in the embodiments of the present invention will be described clearly and completely below with reference to the accompanying drawings in the embodiments of the present invention. Apparently, the described embodiments are merely a part of rather than all of the embodiments of the present invention. Based on the embodiments of the present invention, all other embodiments obtained by those skilled in the art without inventive efforts shall fall within the scope of protection of the present invention.

### Embodiments

First, this embodiment provides an automatic verification method for communication data access of a multi-disciplinary line network intelligent operation and maintenance platform, including:
acquiring a JSON structure body describing device attributes, a device attribute constraint condition, a communication system device information table, and a communication system log file;
parsing the JSON structure body describing device attributes and the device attribute constraint condition, and constructing a structure body to record parsed JSON structure body information and a parsed constraint condition, including device name fields and device ID fields;
extracting a device name and a device ID field from the communication system device information table to construct a monitored device information table;
parsing the communication system log file based on data of the constructed structure body; and
comparing parsing results of the communication system log file with the monitored device information table, and outputting verification results, including device information being received, device information being unreceived, and device information being unknown.

Next, the method steps in this embodiment are described in detail. As shown in FIG. 1, the automatic verification method for communication data access of a multi-disciplinary line network intelligent operation and maintenance platform specifically includes the following steps:
S1. The input JSON structure body describing device attributes, the device attribute constraint condition, the communication system device information table, and the log file are used as input conditions.
S2. Parsing the input JSON structure body describing device attributes and the device attribute constraint condition, specifically includes the following:
   S201. Device attribute fields are extracted from the structure body, the key and value of each device attribute field are decomposed and the data type of the value is identified: number, string, array, or Boolean, etc.
   S202. Array fields are parsed, array names are recorded, the key and value that constitute array data are decomposed, and the data type of the value is identified: number, string, array, or Boolean, etc.
   S203. If there are still array fields, it continues parsing the array fields until the JSON structure body describing device attributes is parsed completely.
   S204. The input device attribute constraint condition is parsed; for example, a sum of the value of device attribute field 1 and the value of device attribute field 2 equals to the value of device attribute field 3. A structure body is then constructed to record the parsed JSON structure body information and the parsed constraint condition, including device name fields and device ID fields.
S3. The device name fields and device ID fields are extracted from the communication system device information table to form a monitored device information table.
S4. Parsing the log file storing the received communication system data information specifically includes the following:
   S401. Data information is extracted from the log file and keywords in the data information are searched to match the JSON structure body.
   S402. If not matched successfully, a prompt is given, and S401 is continued until there is a successful match.
   S403. Based on the matched JSON structure body, check whether the data information meets the structure body requirements and device attribute constraint condition.
   S404. Unqualified issues are recorded; the device name and device ID in the data information are recorded.
   S405. Steps S401-S404 are repeated continuously until the log file is completely extracted.
S5. Check against the monitored device information table and output information such as device information being received, device information being unreceived, and device information being unknown.

Next, a system embodiment of the present invention is provided, i.e., an automatic verification system for communication data access of a multi-disciplinary line network intelligent operation and maintenance platform. The system includes:
an input module, configured to acquire a JSON structure body describing device attributes, a device attribute constraint condition, a communication system device information table, and a communication system log file;
a parsing module for the JSON structure body describing device attributes and the device attribute constraint condition, configured to parse the JSON structure describing device attributes and the device attribute constraint condition, and to construct a structure body to record parsed JSON structure body information and the parsed constraint condition;
a monitored device information table construction module, configured to extract a device name and a device ID field from the communication system device information table to construct a monitored device information table;
a log file parsing module, configured to parse the communication system log file based on data of the constructed structure body; and
a verification module, configured to compare the parsing results of the communication system log file with the monitored device information table, and output verification results, including device information being received, device information being unreceived, and device information being unknown.

The parsing module for the JSON structure body describing device attributes and the device attribute constraint condition is provided with a parsing submodule for the JSON structure body describing device attributes. The parsing submodule is configured to extract device attribute fields in the JSON structure body, decompose a key and a value of each device attribute field, and to identify a data type of the value. If the data type of the value is an array field, parsing is continued until the JSON structure body describing device attributes is parsed completely.

Furthermore, the log file parsing module is configured to read the log file storing the received communication system data information, extract the data information recorded in the log, search for keywords in the data information to match the stored JSON structure body. If not matched successfully, a prompt is given; the next data information recorded in the log is extracted, keywords are searched for matching until there is a successful match. Then, the fields in the data information and the corresponding key and value are checked to determine whether they meet the requirements of the JSON structure body: to check whether there is no unknown or missing device attribute field, and whether the data type of the value in each field is correct. The device attributes with constraint conditions are extracted from the data information, and checked according to the constraint conditions. For example: whether the sum of the value of device attribute field 1 and the value of device attribute field 2 equals to the value of device attribute field 3. The device name and device ID are extracted from the data information and recorded, and an issue present in this data information is recorded, specifically including:
a search and match submodule, configured to extract data information from the communication system log file, search for a keyword in the data information to match the JSON structure body; if not matched successfully, giving a prompt and continuing searching until there is a successful match;
a checking submodule, configured to check whether the data information meets requirements of the JSON structure body information and the constraint condition according to a matched JSON structure body, and to record the device name, the device ID, and a corresponding unqualified issue in the data information; and
a loop submodule, configured to repeatedly operate the search and match submodule and the checking submodule until the communication system log file is extracted and parsed completely.

Those skilled in the art could clearly understand that for the convenience and conciseness of description, the specific working process of the described modules may be reference to the corresponding process in the above embodiments of the method, which is not repeated herein.

The electronic device of the present invention includes a central processing unit (CPU) that may execute various appropriate actions and processes according to the computer program instructions stored in a read-only memory (ROM) or loaded from a storage unit into a random access memory (RAM). In the RAM, various programs and data required for the operation of the device can also be stored. The CPU, the ROM, and the RAM are connected to each other via a bus. An input/output (I/O) interface is also connected to the bus.

A plurality of components in the device are connected to the I/O interface, including: input units, such as a keyboard and a mouse; output units, such as various types of displays and loudspeakers; storage units, such as a disk and an optical disc; and communication units, such as a network card, a modem and a wireless communication transceiver. The communication unit allows the device to exchange information/data with other devices through computer networks such as the Internet and/or various telecommunication networks.

The processing unit performs each of the methods and processes described above, such as methods S1 to S5. For example, in some embodiments, the methods S1 to S5 may be realized as a computer software program that is physically contained in a machine-readable medium, such as a storage unit. In some embodiments, parts or all of the computer program may be loaded and/or installed on the device via the ROM and/or the communication unit. When the computer program is loaded into the RAM and executed by the CPU, one or more steps of the methods S1 to S5 described above can be performed. Alternatively, in other embodiments, the CPU may be configured to execute the methods S1 to S5 by any other appropriate manner (e.g., with the help of a firmware).

The functions described above herein can be performed, at least in part, by one or more hardware logical components. For example, without limitation, demonstration types of hardware logic components that may be used include: a field programmable gate array (FPGA), an application-specific integrated circuit (ASIC), an application-specific standard product (ASSP), a system-on-chip (SOC), a complex programmable logic device (CPLD), and so on.

The program codes for implementing the method of the present invention may be written in any combination of one or more pieces of programming language. These program codes may be provided to a processor or controller of a general-purpose computer, a special-purpose computer or another programmable data processing device so that the program codes, when executed by the processor or controller, implements the functions/operations specified in the flow chart and/or block diagram. The program codes may be executed entirely on a machine, partially on a machine, partially on a machine and partially on a remote machine or completely on a remote machine or server as a stand-alone software package.

In the context of the present invention, the machine-readable medium may be a tangible medium that may contain or store a program for use by or in conjunction with an instruction executing system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium will include an electrical connection based on one or more wires, a portable computer disk, a hard disk, a random access memory (RAM), a read-only memory (ROM), an erasable programmable ROM (EPROM or flash memory), an optical fiber, a convenient compact disk ROM (CD-ROM), an optical storage device, a magnetic storage device, or any suitable combination of the above.

The above are merely detailed embodiments of the present invention, but the protection scope of the present invention is not limited thereto. Moreover, those skilled in the art could readily conceive of various equivalent amendments or replacements within the technical scope disclosed by the present invention; these amendments or replacements shall fall within the protection scope of the present invention. Therefore, the protection scope of the present invention shall be subject to the protection scope of the claims.

## Claims

1. An automatic verification method for communication data access of a multi-disciplinary line network intelligent operation and maintenance platform, comprising:
acquiring a JSON structure body describing device attributes, a device attribute constraint condition, a communication system device information table, and a communication system log file;
parsing the JSON structure body describing device attributes and the device attribute constraint condition, and constructing a structure body to record parsed JSON structure body information and a parsed constraint condition;
extracting a device name and a device ID field from the communication system device information table to construct a monitored device information table;
parsing the communication system log file based on data of the constructed structure body; and
comparing a parsing result of the communication system log file with the monitored device information table, and outputting a verification result.

2. The automatic verification method for communication data access of a multi-disciplinary line network intelligent operation and maintenance platform according to claim 1, wherein a process of parsing the JSON structure body describing device attributes specifically comprises:
extracting device attribute fields from the JSON structure body, decomposing a key and a value of each device attribute field, and identifying a data type of the value; if the data type of the value is an array field, continuing parsing until the JSON structure body describing device attributes is parsed completely.

3. The automatic verification method for communication data access of a multi-disciplinary line network intelligent operation and maintenance platform according to claim 2, wherein if the data type of the value is an array field, continuing parsing until the JSON structure body describing device attributes is completely parsed, specifically comprises: if the data type of the value is the array field, parsing the array field, recording an array name, decomposing a key and a value that constitute array data, identifying the data type of the value; if there is still an array field, continuing parsing the array field until the JSON structure body describing device attributes is parsed completely.

4. The automatic verification method for communication data access of a multi-disciplinary line network intelligent operation and maintenance platform according to claim 2 or 3, wherein the data type of the value comprises a number, a character string, an array, and Boolean.

5. The automatic verification method for communication data access of a multi-disciplinary line network intelligent operation and maintenance platform according to claim 1, wherein the parsed JSON structure body information and the parsed constraint condition comprise a device name field and a device ID field.

6. The automatic verification method for communication data access of a multi-disciplinary line network intelligent operation and maintenance platform according to claim 1, wherein the communication system device information table is an input file of various devices accessing a multi-disciplinary line network platform of a subway provided by a communication manufacturer.

7. The automatic verification method for communication data access of a multi-disciplinary line network intelligent operation and maintenance platform according to claim 1, wherein the parsing the communication system log file based on data of the constructed structure body, specifically comprises:
1) extracting data information from the communication system log file, searching for a keyword in the data information to match the JSON structure body; if not matched successfully, giving a prompt and continuing searching until there is a successful match;
2) checking whether the data information meets requirements of the JSON structure body information and the constraint condition according to a matched JSON structure body, and recording the device name, the device ID, and a corresponding unqualified issue in the data information; and
3) continuing to repeat steps 1) to 2) until the communication system log file is extracted and parsed completely.

8. The automatic verification method for communication data access of a multi-disciplinary line network intelligent operation and maintenance platform according to claim 7, wherein the checking whether the data information meets requirements of the JSON structure body information and the constraint condition in step 2) specifically comprises: if there is no unknown or missing device attribute field, and the data type of the value in each field is correct, the constraint condition is satisfied.

9. The automatic verification method for communication data access of a multi-disciplinary line network intelligent operation and maintenance platform according to claim 1, wherein the verification result comprises device information being received, device information being unreceived, and device information being unknown.

10. An automatic verification system for communication data access of a multi-disciplinary line network intelligent operation and maintenance platform, comprising:
an input module, configured to acquire a JSON structure body describing device attributes, a device attribute constraint condition, a communication system device information table, and a communication system log file;
a parsing module for the JSON structure body describing device attributes and the device attribute constraint condition, configured to parse the JSON structure describing device attributes and the device attribute constraint condition, and to construct a structure body to record parsed JSON structure body information and the parsed constraint condition;
a monitored device information table construction module, configured to extract a device name and a device ID field from the communication system device information table to construct a monitored device information table;
a log file parsing module, configured to parse the communication system log file based on data of the constructed structure body; and
a verification module, configured to compare a parsing result of the communication system log file with the monitored device information table, and to output a verification result.

11. The automatic verification system for communication data access of a multi-disciplinary line network intelligent operation and maintenance platform according to claim 10, wherein the parsing module for the JSON structure body describing device attributes and the device attribute constraint condition is provided with a parsing submodule for the JSON structure body describing device attributes, configured to extract device attribute fields in the JSON structure body, decompose a key and a value of each device attribute field, and to identify a data type of the value; if the data type of the value is an array field, parsing is continued until the JSON structure body describing device attributes is parsed completely.

12. The automatic verification system for communication data access of a multi-disciplinary line network intelligent operation and maintenance platform according to claim 10, wherein the log file parsing module specifically comprises:
a search and match submodule, configured to extract data information from the communication system log file, search for a keyword in the data information to match the JSON structure body; if not matched successfully, giving a prompt and continuing searching until there is a successful match;
a checking submodule, configured to check whether the data information meets requirements of the JSON structure body information and the constraint condition according to a matched JSON structure body, and to record the device name, the device ID, and a corresponding unqualified issue in the data information; and
a loop submodule, configured to repeatedly operate the search and match submodule and the checking submodule until the communication system log file is extracted and parsed completely.

13. The automatic verification system for communication data access of a multi-disciplinary line network intelligent operation and maintenance platform according to claim 10, wherein the verification result output by the verification module comprises device information being received, device information being unreceived, and device information being unknown.

14. An electronic device, comprising a memory on which a computer program is stored, and a processor, wherein when the processor executes the program, the method according to any one of claims 1 to 9 is implemented.

15. A computer-readable storage medium on which a computer program is stored, wherein when the program is executed by a processor, the method according to any one of claims 1 to 9 is implemented.
